## Europäisches Patentamt

## European Patent Office

## Office européen des brevets

(11) Veröffentlichungsnummer: **0 218 813**
A2

(12) ## EUROPÄISCHE PATENTANMELDUNG

(21) Anmeldenummer: 86109973.7

(22) Anmeldetag: 21.07.86

(51) Int. Cl.⁴: **A 01 C 15/04**
A 01 C 7/10

(30) Priorität: 15.10.85 DE 3536695

(43) Veröffentlichungstag der Anmeldung:
22.04.87 Patentblatt 87/17

(84) Benannte Vertragsstaaten:
FR GB

(71) Anmelder: Amazonen-Werke H. Dreyer GmbH & Co. KG
Am Amazonenwerk 9-13
D-4507 Hasbergen-Gaste(DE)

(72) Erfinder: Hülsmann, Werner
Voxtruper Strasse 118
D-4500 Osnabrück(DE)

(54) Pneumatikdüngerstreuer.

(57) Die Erfindung betrifft einen Pneumatikdüngerstreuer, dessen Dosierelemente zumindest gruppenweise durch Unterbrechung des Antriebes stillsetzbar und so die Arbeitsbreite des Pneumatikdüngerstreuers stufenweise reduzierbar ist. Um die Arbeitsbreite in kleinstmöglichen Stufen reduzieren bzw. vergrößern zu können, ist in der einen Ausführungsform vorgesehen, daß jeweils jeder Rohrleitung ein Dosierelement zugeordnet ist und jedes Dosierelement für sich stillsetzbar ist. In einer anderen Ausführungsform ist vorgesehen, daß zumindest einem Teil der Dosierelemente Schieber zugeordnet sind, mit denen die Dosierelemente bzw. die Auslauföffnungen abdeckbar sind. Hierbei sind die Schieber derart ausgebildet, daß zumindest jeweils die halbe Breite der Dosierelemente abdeckbar ist, so daß zusätzlich zu der Unterbrechung des Antriebes der Dosierelemente die Arbeitsbreite in weiteren Stufen durch das Abdecken der Dosierelemente reduzierbar ist.

EP 0 218 813 A2

1

Amazonen-Werke

H. Dreyer GmbH & Co. KG

Am Amazonenwerk 9 - 13

4507 Hasbergen-Gaste

ANR 1 000 667

## Pneumatikdüngerstreuer

Die Erfindung betrifft einen Pneumatikdüngerstreuer gemäß des Oberbegriffes des Anspruches 1.

Ein derartiger Pneumatikdüngerstreuer ist bereits durch die DE-PS 31 16 774 bekannt geworden. Dieser Düngerstreuer zeichnet sich durch fernbedienbare Kupplungen aus, die derart zwischen den Gruppen von Dosierelementen angeordnet sind, daß die Arbeitsbreite gruppenweise durch Unterbrechung des Antriebes für diese Dosierelemente in Richtung auf die Maschinenmitte reduzierbar ist. Derartig ausgebildete Düngerstreuer haben sich in der Praxis bewährt. Bei den immer größer werdenden Arbeitsbreiten der Maschinen ist es nicht mehr ausreichend, die Arbeitsbreite des Düngerstreuers durch ein gruppenweises Außerbetriebsetzen der Dosierelemente zu reduzieren. Die Stufen, in denen sich die Arbeitsbreite reduzieren läßt, sind sehr groß. Zur Anpassung der Streubreite des Düngerstreuers an die jeweiligen Einsatzbedingungen ist es jedoch häufig notwendig, eine kleinere abschnittsweise Reduzierung der Arbeitsbreite vorzunehmen, um sich so beispielsweise an verschiedene Fahrgassensysteme anpassen, oder Grenzstreuarbeiten am Feldrand durchführen zu können.

Des weiteren ist durch die DE-AS 28 51 797 ein Pneumatikdüngerstreuer bekannt, der zwischen den Dosierelementen und den Bodenplatten einen Teil der Dosierelemente abdeckende Absperrschieber aufweist, die sich von Mitte zu Mitte zweier einander benachbarter Dosierelemente erstrecken. Diese Absperrschieber sind ohne Werkzeug lösbar an den Bodenplatten anbringbar. Weiterhin ist es möglich, mit Hilfe der Absperrschieber einzelne, den Rohrleitungen zugeordnete Dosierelemente völlig abzuschalten. Mit den vor den Auslauföffnungen des Vorratsbehälters angeordneten Durchlaßschiebern ist es ebenfalls möglich, diese Auslauföffnungen gruppenweise zu verschließen. Mit Hilfe dieser Absperr- bzw. Durchlaßschieber ist also eine Veränderung der effektiven Streubreite als auch die Einstellung kleinerer Streumengen durchführbar. Ihr haftet jedoch der Nachteil an, daß ein wirksames Reduzieren der Streubreite in kleinen Stufen nur durch den Einbau mehrerer, einzelner Absperrschieber durchführbar ist. Dieses Reduzieren der Streubreite läßt sich zudem nur im Stillstand des Düngerstreuers durchführen, indem eine Bedienungsperson die Absperrschieber vor die Auslauföffnungen des Vorratsbehälters anbringt, wodurch die Düngerzufuhr zu den einzelnen Rohrleitungen unterbrochen wird.

Dadurch, daß jeder Auslauföffnung bzw. jeder Rohrleitung ein einzelner Absperrschieber bei einer Arbeitsbreitenreduzierung zugeordnet werden muß, müssen immer mehrere Absperrschieber eingesetzt werden. Da eine Streubreitenverringerung, die nicht gruppenweise durch den Einsatz der Durchlaßschieber durchgeführt werden kann, immer mit dem Einbau von mehreren Absperrschiebern zwischen Bodenplatten und Dosierelemente verbunden ist, weist der Pneumatikdüngerstreuer gemäß der DE-AS 28 51 797 einen erheblichen Nachteil hinsichtlich der Bedienbarkeit auf. Da es sich bei den Absperrschiebern um keine an der Maschine verbleibenden Verstellelemente handelt, lassen sich diese Schieber nicht über eine Fernbedienung betätigen. Eine Veränderung der Streubreite während des Streuvorganges ist nicht vom Schlepper aus möglich. Der Arbeitsvorgang muß also bei jeder Änderung der Streubreite unterbrochen werden, um den Ein- bzw. Ausbau der Absperrschieber vorzunehmen, was immer mit einem erheblichen Zeitaufwand verbunden ist.

Der Erfindung liegt nun die Aufgabe zugrunde, eine Veränderung der Arbeitsbreite des bekannten Pneumatikdüngerstreuer während des Streuvorganges in kleinst möglichen Abschnitten zu verwirklichen.

Diese Aufgabe wird erfindungsgemäß durch den kennzeichnenden Teil des Anspruches 1 gelöst. Infolge dieser Maßnahmen läßt sich durch die Anordnung der Schieber beispielsweise vor den Auslauföffnungen der Dosierelemente, die die Zufuhr des auszubringenden Materiales zu den jeweils äußeren Rohrleitungen einer Gruppe von Rohrleitungen unterbrechen und so auf einfache Weise und mit einfachsten Mitteln eine kleinere abschnittsweise Reduzierung der bereits in größeren Abschnitten reduzierbaren Arbeitsbreite verwirklichen. Die Arbeitsbreite, die durch die in einer Gruppe angeordneten Dosierelemente mit Material beaufschlagt wird, läßt sich somit durch den Einsatz nur eines zusätzlichen Schiebers um die Hälfte reduzieren.

In einer Ausführungsform ist erfindungsgemäß vorgesehen, daß jeweils für jede Gruppe von Dosierelementen, deren Antrieb unterbrechbar ist, zumindest ein Schieber vorgesehen ist, der einen Teil der Breite der Dosierelemente abdeckt. Infolge dieser Maßnahme lassen sich die Pneumatikdüngerstreuer mit Schiebern unterschiedlicher Breite ausrüsten, so daß beim Einsatz dieser Schieber ein Reduzieren der Arbeitsbreite um jeweils stimmte Breiten erfolgt.

In einer besonders bevorzugten Ausführungsform ist erfindungsgemäß vorgesehen, daß die Schieber mit einer Fernbedienungsvorrichtung verbunden sind. Infolge dieser Maßnahme läßt sich die Arbeitsbreite in besonders vorteilhafter Weise während des Streuvorganges verkleinern und vergrößern, so daß die Arbeitsbreite des Pneumatikdüngerstreuers während des Ausbringvorganges den jeweiligen Einsatzbedingungen angepaßt werden kann. Zudem wird der Zeitaufwand für das Ausbringen von Düngemitteln erheblich reduziert, da ein zeitaufwendiges Ein- und Ausbauen von Schiebern entfällt.

In einer weiteren Ausführungsform ist erfindungsgemäß vorgesehen, daß jeweils jeder Rohrleitung ein Dosierelement zugeordnet ist, wobei jedes Dosierelement für sich stillsetzbar ist. Hierbei ist vorgesehen, daß jedes Dosierelement zwischen zwei Seitenwänden in einem Sägehäuse angeordnet ist und daß jedem Dosierelement eine Bodenklappe zugeordnet ist.

Infolge dieser Maßnahmen wird der bekannte Pneumatikdüngerstreuer derart weitergebildet, daß in kleinstmöglichen Stufen die Arbeitsbreite reduziert bzw. vergrößert werden kann. Hierdurch wird es also auch möglich, sich geringen Arbeitsbreitenänderungen wie sie beispielsweise auf keilförmigen Nutzflächen vorkommen, anpassen zu können.

In einer besonders bevorzugten Ausführungsform ist vorgesehen, daß jedes Dosierelement für sich mit der Antriebswelle bzw. dem Antrieb kuppelbar ist, wobei zwischen den Dosierelementen jeweils eine Kupplung derart angeordnet ist, daß die Dosierelemente über eine Fernbedienungsvorrichtung stillsetzbar sind. Die Zuordnung einer Kupplung zu jedem Dosierelement stellt die kleinstmögliche Abstufung zum Verkleinern und Vergrößern der Arbeitsbreite dar, so daß in der Praxis eine äußerst genaue Anpassung der Arbeitsbreite de:

Maschine an die zu bestreuende Arbeitsbahn in einfacher Weise möglich ist. Hierdurch wird dem Benutzer die Möglichkeit geboten, die Düngerzufuhr an jeder beliebigen Stelle zu den einzelnen Rohrleitungen zu unterbrechen und wieder freizugeben, so daß er den Dünger auch in Streifen ausbringen kann, um so beispielsweise das Düngen von Hackfrüchten mit unterschiedlichen Reihenweiten und Arbeitsbreiten vornehmen zu können.

Weiterhin ist erfindungsgemäß vorgesehen, daß die Dosierelemente zusätzlich guppen- bzw. blockweise stillsetzbar sind. Neben der unabhängigen Einzelbetätigung der jeweils zwischen den Dosierelementen angeordneten Kupplungen ist es auch vorgesehen, die Kupplungen gruppenweise zu betätigen. Hierdurch ist es möglich, die Düngerzufuhr zu ganzen Teilbreiten des Verteilergestänges auf einmal zu unterbrechen, wenn dies während des Arbeitsvorganges notwendig wird.

Die Erfindung sieht zudem vor, daß zusätzlich zu den Einzelkupplungen Kupplungen für die gruppen- bzw. blockweise Abschaltung vorgesehen sind. Die zusätzliche Anordnung der Kupplungen zu den Einzelkupplungen stellt eine Entlastung für die Einzelkupplungen sowie eine Sicherung bei einem Versagen der Einzelkupplungen dar.

Weitere Einzelheiten der Erfindung sind der Beispielsbeschreibung sowie den Zeichnungen zu entnehmen. Hierbei zeigen

Fig. 1 die erfindungsgemäße Blockteilbreitenschaltung; neben der Unterbrechung des Antriebes zusätzliche Reduzierung der Arbeitsbreite durch zusätzliche Schieber in Teilansicht von der Seite und

Fig. 2 die erfindungsgemäß ausgerüstete Maschine ausschnittsweise im Querschnitt und

Fig. 3 die Maschine gemäß Fig. 2 in Teilansicht im
Schnitt III - III.

Der bekannte und daher nur in Teilansicht dargestellte
Pneumatikdüngerstreuer ist mit einem Vorratsbehälter 1 und
quer zur Fahrtrichtung 2 nach beiden Seiten verlaufendenen
Rohrleitungen 3 ausgestattet, welche in bekannter und
nicht dargestellter Weise von unterschiedlicher Länge sind
und an ihren äußeren Enden je eine Ausströmöffnung
aufweisen. Ferner sind diese Rohrleitungen 3 an dem in
Fahrtrichtung 2 verlaufenden Luftkanal 4 angeschlossen, in
dem das Gebläse 5 mündet.

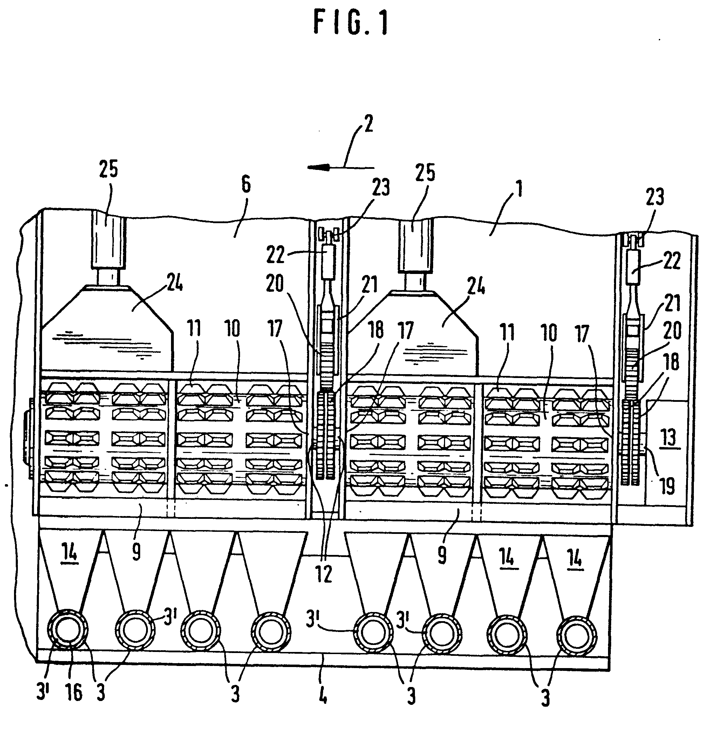

In den beiden Seitenwänden 6 des Vorratsbehälters 1 und
dicht oberhalb von dessen dachförmigem Behälterboden 7
befinden sich beiderseits jeweils in Fahrtrichtung 2
verlaufende Ausströmöffnungen 8, von denen nur die auf
der linken Seite des Vorratsbehälters 1 vorhandenen in
den Fig. 1 bis 3 dargestellt und immer in Gruppen zu je
vier Auslauföffnungen zusammengefaßt sind. Jeder
Auslauföffnung 8 ist eine Rohrleitung 3 zugeordnet.

Gemäß Fig. 1 sind vor den Auslauföffnungen 8 oberhalb der
an dem Behälterboden angeschlossenen und schräg nach
außen ragenden Bodenplatten 9 die Dosierelemente 10 in
Form von zu Gruppen zusammengefaßten Nockenrädern 11
angeordnet. Die Nockenräder 11 sind drehfest auf den
Säwellen 12 befestigt und werden in bekannter Weise
mittels des Regelgetriebes 13 mit veränderbaren
Geschwindigkeiten angetrieben.

Unterhalb des nach unten abgewinkelten Ablaufrandes der
Bodenplatten 9 befinden sich die Einlauftrichter 14, von
denen je einer an einer Rohrleitung 3 angebracht ist und
die Einlauföffnung 15 seitlich einfaßt. Vor den
Einlauföffnungen 15 sind die Rohrleitungen 3 mit je einer Rohrverengung 16 ausgestattet, um in den Einlauföffnungen 15 einen Luftsog zu erzeugen.

In allen Fällen, in denen körniges Material in größeren und mittleren Streumengen sowie unter Ausnutzung der vollen effektiven Streubreite des Streufächers der Maschine über den Boden verteilt werden soll, wird das durch die Auslauföffnungen 8 des Vorratsbehälters 1 rinnende Material von allen Nockenrädern 11 über den Auslaufrand der Bodenplatten 9 gefördert und fällt in die Einlauftrichter 14. Hier wird es von dem Luftsog erfaßt und durch die Einlauföffnungen 15 in die Rohrleitungen 3 hineingesogen und durch den vom Gebläse 5 erzeugten Luftstrom den Auslauföffnungen der Rohrleitungen 3 zugeführt, von wo es in gleichmäßiger Breitverteilung auf den Boden gelangt.

Die Säwellen 12 der Nockenräder 11 ragen aus den Lagerstellen 17 heraus und auf den Enden der Säwellen 12 sind die Zahnräder 18 angeordnet. Auf der Antriebswelle 19 des Regelgetriebes 13 befindet sich ebenfalls ein Zahnrad 18. Diese Zahnräder 18 sind gleich und die Antriebswelle 19 und die Säwelle 12 der einzelnen in Gruppen angeordneten Nockenräder 11 fluchten miteinander.

Oberhalb der Zahnräder 18 ist jeweils das Kupplungszahnrad 20 mit Hilfe der Schwinge 21 schwenkbar angeordnet. Durch den fernbedienbaren Hydraulikzylinder 22 wird die Schwinge 21 mit dem Kupplungszahnrad 20 um den Bolzen 23 verschwenkt, so daß hierdurch der Antrieb der einzelnen Nockenradgruppen ein- bzw. ausgeschaltet wird.

In normaler Betriebsstellung befinden sich die Kupplungszahnräder 20 im Eingriff mit den Zahnrädern 18, so daß die Nockenräder 11 von dem Regelgetriebe 13 angetrieben werden und allen Rohrleitungen 3 das Material zugeführt wird. Die vor den Auslauföffnungen 8 der jeweiligen äußeren Rohrleitungen 3 angeordneten Schieber 24, die sich über die halbe Breite der Dosierelemente 10 erstreckten, befinden sich in geöffneter Position. Diese Schieber 24 sind über die Fernbedienungseinrichtung 25 vom Schlepper aus zu betätigen, so daß jeweils die halbe Breite der Dosierelemente abdeckbar wird.

Somit ergibt sich die Möglichkeit, die Arbeitsbreite des Pneumatikdüngerstreuers in kleineren Stufen zu reduzieren. Neben der gruppenweisen Unterberechung des Antriebes für die Dosierelemente 10 besteht jetzt die Möglichkeit, durch Betätigen der Schieber 24 die Arbeitsbreite des Pneumatikdüngerstreuers in kleineren Stufen zu reduzieren. Durch Verschließen der Auslauföffnung 8 durch den Schieber 24 wird die Düngerzufuhr zu den jeweils äußeren Rohrleitungen 3' unterbrochen. Um die Streubreite des Streufächers der Maschine stufenweise zu verringern, wird zunächst die Düngemittelzufuhr zu den jeweiligen äußeren Rohrleitungen 3' durch die Schieber 24 unterbrochen, so daß die den äußeren Rohrleitungen 3' zugeordneten Nockenräder 11 der hinteren Gruppe von Dosierelementen 10 keine Düngemittel mehr fördern. Die halbe Breite der Dosierelemente 10 wird durch die Schieber 24 verdeckt, so daß die Arbeitsbreite der Maschine gemäß Fig. 1 um 1/4 reduziert wird. Soll nun die Arbeitsbreite des Pneumatikdüngerstreuers um die Hälfte reduziert werden, wird jeweils die am weitesten entfernt liegende und den äußersten Ausströmöffnungen das Material zuführende Nockenradgruppe abgeschaltet, indem der Antrieb für diese Nockenradgruppe durch Hochschwenken der jeweiligen Schwinge 21 und des Kupplungszahnrades 20 mit Hilfe des Hydraulikzylinders 22 unterbrochen wird. Soll die Streubreite weiter reduziert werden, so daß nur noch 1/4 der Gesamtstreubreite aufweist, so wird der zweite Schieber 24 über die Fernbedienungseinrichtung 25 betätigt, und die Düngemittelzufuhr zu den dem Schieber zugeordneten Rohrleitungen unterbrochen. Soll der gesamte Antrieb für die in einer Reihe angeordneten Nockenradgruppen, die den Rohrleitungen 3 einer Seite das Material zuführen, unterbrochen werden, wird durch Hochschwenken der oberhalb des Regelgetriebes 13 angeordneten Schwinge 21 mit dem Kupplungszahnrad 20 der Antrieb unterbrochen. Die Maschine bringt das Material nur noch einseitig aus.

Durch die Anordnung von zwei zusätzlichen Schiebern 24 wird auf einfache Weise und mit einfachsten Mitteln eine kleinere abschnittsweise Reduzierung der bereits in größeren Abschnitten reduzierbaren Arbeitsbreiten verwirklicht.

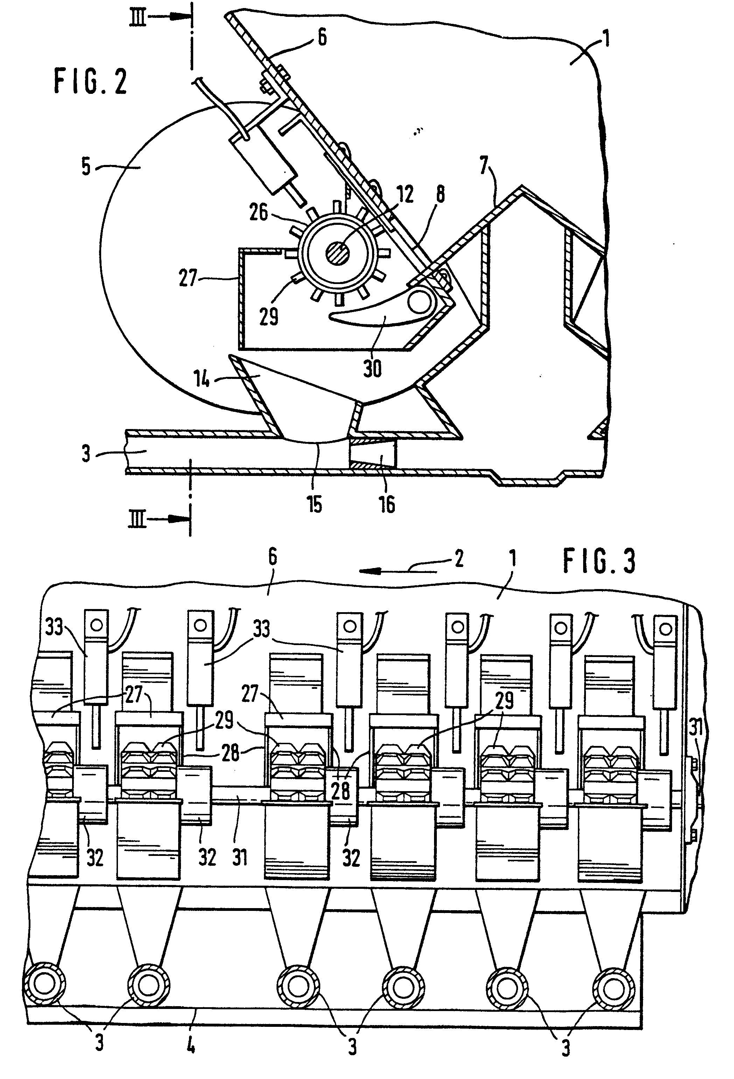

Die in den Fig. 2 und 3 ebenfalls in Teilansicht abgebildete Maschine zum pneumatischen Ausbringen von Material unterscheidet sich nur in einem andersartig ausgebildeten Dosiermechanismus von der Maschine gemäß Fig. 1.

Die Maschine weist den Vorratsbehälter 1 und die quer zur Fahrtrichtung 2 nach beiden Seiten verlaufenden Rohrleitungen 3 auf, welche in bekannter und nicht dargestellter Weise von unterschiedlicher Länge sind und an ihren Enden je eine Ausströmöffnung aufweisen. Diese Rohrleitungen 3 sind ebenfalls an dem in Fahrtrichtung 2 verlaufenden Luftkanal 4 angeschlossen, in dem das Gebläse 5 mündet.

In beiden Seitenwänden 6 des Vorratsbehälters 1 und dicht oberhalb von dessen dachförmigem Behälterboden 7 befinden sich beiderseits die jeweils in Fahrtrichtung 2 verlaufenden, in einer Reihe angeordneten Auslauföffnungen 8, von denen wieder nur ein Teil der linken Seite des Vorratsbehälters 1 dargestellt ist. Jeder Rohrleitung 3 ist ein Dosierelement 26 zugeordnet.

Die Dosierelemente 26 sind jeweils in Sägehäusen 27, die zwei Seitenwände 28 aufweisen, untergebracht. Die vor den Auslauföffnungen 8 zugeordneten Dosierelemente 26 sind als Nockensäräder 29 ausgebildet und fördern die Düngemittel über gefederte Bodenklappen 30 zu den Einlauftrichtern 14 der Rohrleitungen 3. Die Nockensäräder 29 sind lose auf den Antriebswellen 31 gelagert und werden in bekannter Weise mittels eines Regelgetriebes in veränderbaren Geschwindigkeiten angetrieben. Über die jeweils einem Nockensärad 29 zugeordneten Kupplungen 32 ist jedes Dosierelement 26 einzeln und unabhängig mit der Antriebswelle 31 kuppelbar. Durch die Fernbedienungseinrichtung 33 lassen sich die Kupplungen 32 der Dosierelemente 26 jeder Zeit unabhängig voneinander betätigen, so daß die Düngemittelzufuhr zu den einzelnen Rohrleitungen 3 jederzeit unterbrochen bzw. wiederhergestellt werden kann.

Dadurch, daß jeder Rohrleitung 3 ein eigenes, stillsetzbares Dosierelement 26 zugeordnet wird, läßt sich die Streubreite dieses Pneumatikdüngerstreuers in kleinstmöglichen Stufen verkleinern und vergrößern. Der Düngerstreuer läßt sich so vielen beliebigen Einsatzbedingungen anpassen. Die unabhängige Betätigung der einzelnen Kupplungen 32 erlaubt das Stillsetzen von Dosierelementen 26 an jeder beliebigen Stelle, so daß der Dünger beispielsweise auch in Streifen abgegeben werden kann. Die Kupplungen 32 lassen sich sowohl einzeln als auch gruppenweise betätigen.

Amazonen-Werke

H. Dreyer GmbH & Co. KG

Am Amazonenwerk 9 - 13

4507 Hasbergen-Gaste

ANR 1 000 667

Patentansprüche
------------------------------

1.

Pneumatikdüngerstreuer, der mit einem Vorratsbehälter und mit im wesentlichen quer zur Fahrtrichtung verlaufenden sowie mit einem Gebläse verbundenen Rohrleitungen unterschiedlicher Länge ausgestattet ist, deren äußere Enden mit Ausströmöffnungen versehen sind, denen das Material aus dem Vorratsbehälter über Auslauföffnungen, über einen regelbaren Antrieb angetriebene Dosierelemente in einstellbaren Mengen zugeführt wird, wobei die Dosierelemente zumindest gruppenweise durch Unterbrechung ihres Antriebs stillsetzbar und so die Arbeitsbreite des Pneumatikdüngerstreuers stufenweise reduzierbar ist und die Dosierelemente durch zwischen den Dosierelementen und den Auslauföffnungen angeordneten Schiebern abdeckbar sind, dadurch gekennzeichnet, daß die Schieber (24) derart ausgebildet sind, daß zumindest jeweils die halbe Breite der Dosierelemente abdeckbar ist, so daß zusätzlich zu der Unterbrechung des Antriebes (18) der Dosierelemente die Arbeitsbreite in weiteren Stufen durch das Abdecken der Dosierelemente (10) reduzierbar ist.

2.

Pneumatikstreuer nach Anspruch 1, dadurch gekennzeichnet, daß jeweils für jede Gruppe von Dosierelementen, deren Antrieb unterbrechbar ist, zumindest ein Schieber

2

vorgesehen ist, der einen Teil der Breite der Dosierelemente abdeckt.

3.
Pneumatikstreuer nach Anspruch 2, dadurch gekennzeichnet, daß die Schieber (24) mit einer Fernbedienungsvorrichtung (25) verbunden sind.

4.
Pneumatikstreuer, der mit einem Vorratsbehälter und mit im wesentlichen quer zur Fahrtrichtung verlaufenden sowie mit einem Gebläse verbundenen Rohrleitungen unterschiedlicher Länge ausgestattet ist, deren äußere Enden mit Ausströmöffnungen versehen sind, denen das Material aus dem Vorratsbehälter über Auslauföffnungen, über einen regelbaren Antrieb angetriebene Dosierelemente in einstellbaren Mengen zugeführt wird, wobei die Dosierelemente zumindest gruppenweise durch Unterbrechung ihres Antriebs stillsetzbar und so die Arbeitsbreite des Pneumatikdüngerstreuers stufenweise reduzierbar ist, dadurch gekennzeichnet, daß jeweils jeder Rohrleitung (3) ein Dosierelement (26) zugeordnet ist und jedes Dosierelement (26) für sich stillsetzbar ist.

5.
Pneumatikstreuer nach Anspruch 4, dadurch gekennzeichnet, daß jedes Dosierelement (26) zwischen zwei Seitenwänden (28) angeordnet ist.

6.
Pneumatikstreuer nach Anspruch 5, dadurch gekennzeichnet, daß jedes Dosierelement (26) in einem Sägehäuse (27) angeordnet ist.

7.
Pneumatikstreuer nach Anspruch 5, dadurch gekennzeichnet, daß die unterhalb den Dosierelementen angeordnete

3

Bodenplatte (30) geteilt ist, und daß jedem Dosierelement eine Bodenplatte zugeordnet ist.

8.

Pneumatikstreuer nach Anspruch 4, dadurch gekennzeichnet, daß jedes Dosierelement (26) für sich mit der Antriebswelle (31) kuppelbar ist.

9.

Pneumatikstreuer nach Anspruch 8, dadurch gekennzeichnet, daß zwischen den Dosierelementen (26) jeweils eine Kupplung (32) angeordnet ist.

10.

Pneumatikstreuer nach Anspruch 8 oder 9, dadurch gekennzeichnet, daß die Dosierelemente (26) über eine Fernbedienungsvorrichtung (33) stillsetzbar sind.

11.

Pneumatikstreuer nach Anspruch 4, dadurch gekennzeichnet, daß zusätzlich die Dosierelemente (26) gruppen- bzw. blockweise stillsetzbar sind.

12.

Pneumatikstreuer nach Anspruch 8 oder 9, dadurch gekennzeichnet, daß die Kupplungen (32) einzeln unabhängig voneinander sowie gruppenweise zu betätigen sind.

13.

Pneumatikstreuer nach Anspruch 8 oder 9, dadurch gekennzeichnet, daß zusätzlich zu den Einzelkupplungen (32) Kupplungen für die gruppen- bzw. blockweise Abschaltung vorgesehen sind.

# FIG.1

0218813

FIG. 2

FIG. 3

Amazonen - Werke H. Dreyer GmbH & Co. K